(19) Europäisches Patentamt / European Patent Office / Office européen des brevets

(11) **EP 4 542 583 A1**

(12) **EUROPEAN PATENT APPLICATION**
published in accordance with Art. 153(4) EPC

(43) Date of publication:
**23.04.2025 Bulletin 2025/17**

(21) Application number: 23823669.9

(22) Date of filing: **26.05.2023**

(51) International Patent Classification (IPC):
$H01B\ 1/10^{(2006.01)}$     $C01B\ 25/14^{(2006.01)}$
$H01B\ 1/06^{(2006.01)}$     $H01B\ 13/00^{(2006.01)}$
$H01M\ 10/052^{(2010.01)}$   $H01M\ 10/0562^{(2010.01)}$

(52) Cooperative Patent Classification (CPC):
C01B 25/14; H01B 1/06; H01B 1/10; H01B 13/00;
H01M 10/052; H01M 10/0562; Y02E 60/10

(86) International application number:
**PCT/JP2023/019737**

(87) International publication number:
**WO 2023/243370 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 JP 2022098230**

(71) Applicant: AGC INC.
Chiyoda-ku,
Tokyo 1008405 (JP)

(72) Inventors:
• FUJII Naoki
  Tokyo 100-8405 (JP)
• AKATSUKA Kosho
  Tokyo 100-8405 (JP)
• HOMMA Osamu
  Tokyo 100-8405 (JP)

(74) Representative: **Müller-Boré & Partner Patentanwälte PartG mbB Friedenheimer Brücke 21 80639 München (DE)**

(54) **SULFIDE-BASED SOLID ELECTROLYTE POWDER, METHOD FOR PRODUCING SULFIDE-BASED SOLID ELECTROLYTE POWDER, SULFIDE-BASED SOLID ELECTROLYTE LAYER, AND LITHIUM ION SECONDARY BATTERY**

(57)     The present invention relates to: a sulfide-based solid electrolyte powder that generates photoluminescence at a wavelength of 660 to 750 nm; a method for producing the same; a sulfide-based solid electrolyte layer containing the sulfide-based solid electrolyte powder; and a lithium-ion secondary battery.

*FIG. 3*

**EP 4 542 583 A1**

## Description

### TECHNICAL FIELD

The present invention relates to a sulfide-based solid electrolyte powder, a method for producing the sulfide-based solid electrolyte powder, a sulfide-based solid electrolyte layer, and a lithium-ion secondary battery.

### BACKGROUND ART

Lithium-ion secondary batteries are widely used for a portable electronic device such as a mobile phone and a notebook computer. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

The solid electrolytes are roughly classified into sulfide-based solid electrolytes and oxide-based solid electrolytes. Among these, the sulfide-based solid electrolytes exhibit high ionic conductivity because the sulfide-based solid electrolytes contain sulfide ions that have high polarizability. As the sulfide-based solid electrolytes, argyrodite crystals such as $Li_{5.4}PS_{4.4}Cl_{0.8}Br_{0.8}$, LPS crystallized glass such as $Li_7P_3S_{11}$ crystallized glass, and the like are known.

### CITATION LIST

### PATENT LITERATURE

Patent Literature 1: JP2016-24874A

### NON-PATENT LITERATURE

Non Patent Literature 1: Interface Stability in Solid-State Batteries, Chem. Mater. 2016, 28, 266-273

### SUMMARY OF INVENTION

### TECHNICAL PROBLEM

On the other hand, the sulfide-based solid electrolyte is known to have a narrow theoretical potential window and poor electrochemical stability due to particularly high reactivity with high-voltage cathodes (Non Patent Literature 1). Further, the sulfide-based solid electrolyte has a problem of poor water resistance since the sulfide-based solid electrolyte reacts with moisture to generate hydrogen sulfide (Patent Literature 1).

In view of the above circumstances, an object of the present invention is to provide a sulfide-based solid electrolyte powder having excellent electrochemical stability and water resistance, a method for producing the sulfide-based solid electrolyte powder, a sulfide-based solid electrolyte layer, and a lithium-ion secondary battery.

### SOLUTION TO PROBLEM

As a result of intensive studies, the present inventors have found that a sulfide-based solid electrolyte powder that emits photo-luminescence light in a specific wavelength region is excellent in electrochemical stability and water resistance, and have thus completed the present invention.

That is, the present invention relates to the following [1] to [10].

[1] A sulfide-based solid electrolyte powder that emits photo-luminescence light between a wavelength of 660 nm to 750 nm.

[2] The sulfide-based solid electrolyte powder according to [1], in which a photo-luminescence peak ratio is 0.2 or more in a Raman spectrum obtained by excitation with light having a wavelength of 532 nm as represented by the following formula.

Photo-luminescence peak ratio = integrated intensity of peak in Raman shift region of 4300 $cm^{-1}$ to 4500 $cm^{-1}$/integrated intensity of peak in Raman shift region of 400 $cm^{-1}$ to 450 $cm^{-1}$

[3] The sulfide-based solid electrolyte powder according to [1], containing an argyrodite crystal.

[4] The sulfide-based solid electrolyte powder according to [1], in which a lattice distortion is 0.002 or more.

[5] The sulfide-based solid electrolyte powder according to [1], which satisfies the following formula:

$$\text{BET specific surface area } (\text{m}^2/\text{g}) \times \text{lattice distortion} \geq 0.01$$

[6] The sulfide-based solid electrolyte powder according to [1], in which an atomic ratio of a Cl element to a Br element is 0.2:1.6 to 1.6:0.2.

[7] A method for producing the sulfide-based solid electrolyte powder according to any one of [1] to [6].

[8] The method for producing the sulfide-based solid electrolyte powder according to [7], the method including a step of pulverizing a sulfide-based solid electrolyte containing at least one of a crystal phase and an amorphous phase in the presence of a chromium source and an oxygen source.

[9] A sulfide-based solid electrolyte layer including the sulfide-based solid electrolyte powder according to any one of [1] to [6].

[10] A lithium-ion secondary battery including the sulfide-based solid electrolyte powder according to any one of [1] to [6].

ADVANTAGEOUS EFFECTS OF INVENTION

According to the present invention, it is possible to provide a sulfide-based solid electrolyte powder excellent in electrochemical stability and water resistance, a sulfide-based solid electrolyte layer, and a lithium-ion secondary battery.

BRIEF DESCRIPTION OF DRAWINGS

FIG. 1 is a Raman spectrum showing integrated intensity of a peak in a Raman shift region of 4300 cm$^{-1}$ to 4500 cm$^{-1}$ of a sulfide-based solid electrolyte powder in Example 3.

FIG. 2 is a Raman spectrum showing integrated intensity of a peak in a Raman shift region of 400 cm$^{-1}$ to 450 cm$^{-1}$ of the sulfide-based solid electrolyte powder in Example 3.

FIG. 3 shows a Raman spectrum of sulfide-based solid electrolyte powders in Examples 1, 3, and 7.

DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

<Sulfide-Based Solid Electrolyte Powder>

A sulfide-based solid electrolyte powder according to an embodiment of the present invention (hereinafter also referred to as the present powder) emits photo-luminescence light between a wavelength of 660 nm to 750 nm. The sulfide-based solid electrolyte powder that emits photo-luminescence light in the above-mentioned specific wavelength region has excellent electrochemical stability and water resistance.

In the present embodiment, detection of the photo-luminescence light between a wavelength of 660 nm to 750 nm is performed using a microscopic Raman spectrometer. A wavelength of the photo-luminescence light varies somewhat depending on a presence state of a luminescence center. When photo-luminescence light in a wavelength of 689.8 nm to 699.4 nm is emitted, this means that a Raman spectrum obtained by excitation with light having a wavelength of 532 nm has a peak in a Raman shift region of 4300 cm$^{-1}$ to 4500 cm$^{-1}$. This is because Raman shift is defined as a difference between energy of incident excitation light and energy of observed Raman scattering light.

The Raman spectrum is measured using a microscopic Raman spectrometer (for example, LabRAM HR Evolution manufactured by Horiba, Ltd.). The measurement can be performed under the following measurement conditions: an objective lens having a magnification of 10 and a numerical aperture of 0.25 is used, and a power of a laser focused on the sulfide-based solid electrolyte powder is adjusted to about 5 mW. For the obtained spectrum, intensity is calibrated using a standard halogen lamp light source. The above phrase "have a peak" generally means having a value three times or more a standard deviation value of a background (sample not emitting light).

In the present embodiment, the reason why the photo-luminescence light between a wavelength of 660 nm to 750 nm is emitted is that $Cr^{3+}$ corresponding to the peak is present on a particle surface of the sulfide-based solid electrolyte powder. Further, the photo-luminescence light between a wavelength of 660 nm to 750 nm originates from the 2E→4A2 spin-forbidden transition of $Cr^{3+}$. Wavelengths thereof are known to be 692 nm and 694 nm (see, for example, Michele et al., Chem. Mater. 2021, 33, 9, 3379-3385).

Thus, the present powder emits the photo-luminescence light between a wavelength of 660 nm to 750 nm due to the presence of $Cr^{3+}$ on the particle surface of the powder, and exhibits excellent electrochemical stability and water resistance by having such characteristics. In other words, when the present powder exhibits the excellent electrochemical stability and the water resistance due to the presence of $Cr^{3+}$ on the particle surface of the present powder, the photo-luminescence light thereof is emitted in a wavelength range of 660 nm to 750 nm.

The reason why the presence of $Cr^{3+}$ on the particle surface of the present powder enables the excellent electrochemical stability and water resistance is not clear, but is presumed to be as follows. In other words, it is presumed that $Cr^{3+}$ penetrates into a crystal structure of a solid electrolyte, or a chromium oxide film having a distorted structure is formed on a particle surface, thereby preventing oxidative decomposition of the present powder and increasing the electrochemical stability, and further preventing a surface reaction with $H_2O$ to improve the water resistance. The present embodiment is not limited to the above-described action mechanism.

In the present powder, a photo-luminescence peak ratio in a Raman spectrum obtained by excitation with light having a wavelength of 532 nm represented by the following formula is preferably 0.2 or more.

Photo-luminescence peak ratio = integrated intensity of peak in Raman shift region of 4300 $cm^{-1}$ to 4500 $cm^{-1}$/integrated intensity of peak in Raman shift region of 400 $cm^{-1}$ to 450 $cm^{-1}$

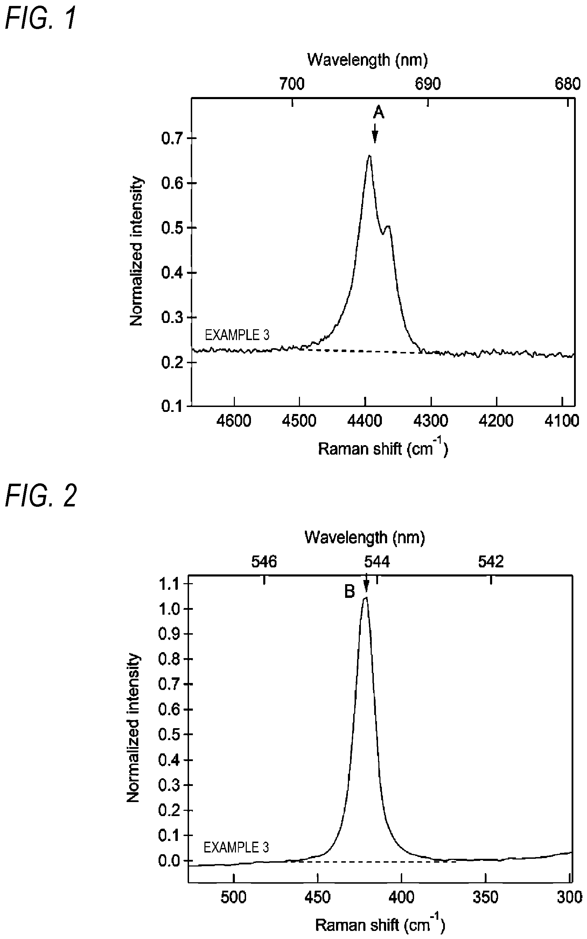

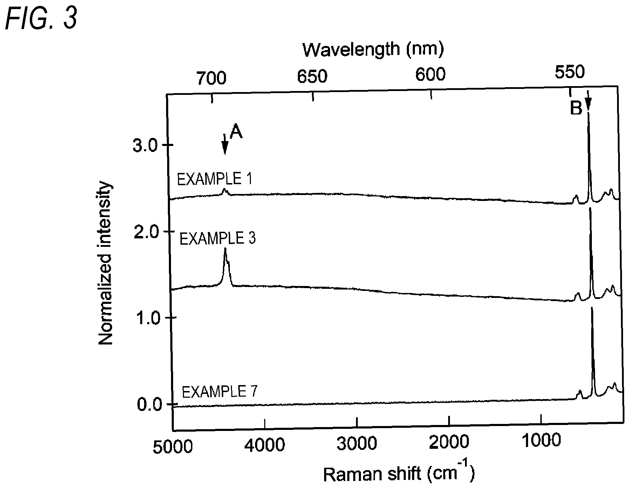

The integrated intensity of the peak in the Raman shift region of 4300 $cm^{-1}$ to 4500 $cm^{-1}$ means, for example, integrated intensity of a peak indicated by an arrow A in a Raman spectrum obtained by excitation with light having a wavelength of 532 nm as shown in FIG. 1 or FIG. 3. This is due to the presence of $Cr^{3+}$ on the particle surface of the present powder, as described above. Further, the integrated intensity of the peak in the Raman shift region of 400 $cm^{-1}$ to 450 $cm^{-1}$ means integrated intensity of a peak indicated by an arrow B in FIG. 2 or FIG. 3. This is due to the presence of a structure derived from $PS_4^{3-}$ in the present powder.

The photo-luminescence peak ratio of 0.2 or more means that a peak in the Raman shift region of 4300 $cm^{-1}$ to 4500 $cm^{-1}$ is high, that is, $Cr^{3+}$ is present on the particle surface of the present powder and the $Cr^{3+}$ exists in a form that enables the particle to exhibit excellent electrochemical stability and water resistance.

The photo-luminescence peak ratio in the present powder is more preferably 0.3 or more, still more preferably 0.5 or more, and particularly preferably 0.75 or more. Although there is no particular upper limit, as a practical range, the photo-luminescence peak ratio is more preferably 10 or less, still more preferably 5 or less, and particularly preferably 3 or less.

The present powder may have a lattice distortion due to the presence of $Cr^{3+}$ on the particle surface. The lattice distortion of the present powder is preferably 0.002 or more, more preferably 0.003 or more, and still more preferably 0.0035 or more. The lattice distortion of 0.002 or more means that $Cr^{3+}$ is present on the particle surface of the present powder and $Cr^{3+}$ exists in a form that enables the particle to exhibit the excellent electrochemical stability and water resistance.

From the viewpoint of ionic conductivity, the lattice distortion in the present powder is preferably 0.01 or less, more preferably 0.007 or less, and still more preferably 0.005 or less.

The lattice distortion of the present powder is measured by carrying out Rietveld analysis of an XRD pattern, as described later in the Examples.

The present powder has a BET specific surface area of preferably 5 $m^2/g$ or more, more preferably 9 $m^2/g$ or more, and still more preferably 12 $m^2/g$ or more. When the BET specific surface area of the present powder is within the above range, $Cr^{3+}$ can be efficiently incorporated into the particle surface of the present powder.

If the specific surface area of the present powder is too large, it is difficult to handle the powder, so the BET specific surface area is preferably 30 $m^2/g$ or less, more preferably 25 $m^2/g$ or less, and still more preferably 20 $m^2/g$ or less.

Here, the BET specific surface area means a nitrogen adsorption specific surface area measured by the BET method. The BET specific surface area of the present powder is measured, for example, according to conditions described in the Examples.

The present powder has an index, that is "BET specific surface area ($m^2/g$) × lattice distortion", which is obtained by multiplying the BET specific surface area by the lattice distortion which is an effect of $Cr^{3+}$ being incorporated into the surface, of preferably 0.01 or more, more preferably 0.03 or more, and still more preferably 0.05 or more. There is no particular upper limit for the "BET specific surface area ($m^2/g$) x lattice distortion", but as a practical range, the upper limit may be, for example, 0.1 or less, 0.08 or less, or 0.07 or less.

The sulfide-based solid electrolyte in the present powder includes a sulfide-based solid electrolyte containing a lithium element, for example, a sulfide-based solid electrolyte having an argyrodite crystal structure such as $Li_{5.4}PS_{4.4}Cl_{0.8}Br_{0.8}$, $Li_6PS_5Cl$, and $Li_{5.4}PS_{4.4}Cl_{1.6}$, Li-P-S-Ha-based (Ha represents at least one element selected from the halogen elements) crystallized glass; crystallized glass having Li-P-S elements, such as $Li_7P_3S_{11}$; and sulfide-based solid electrolytes having a LGPS crystal structure, such as $Li_{10}GeP_2S_{12}$.

Depending on the purpose, the sulfide-based solid electrolyte may be a sulfide-based solid electrolyte containing an amorphous phase, may be a sulfide-based solid electrolyte containing a specific crystal phase, or may be a sulfide-based solid electrolyte containing a crystal phase and an amorphous phase. Among these, from the viewpoint of facilitating the creation of a distorted structure in which $Cr^{3+}$ is incorporated into the particle surface, a sulfide-based solid electrolyte containing both a crystal phase and an amorphous phase is preferred. Examples of sulfide-based solid electrolytes that are likely to have such a structure include sulfide-based solid electrolytes having an argyrodite crystal structure and crystallized glass containing Li-P-S elements. The crystal phase is more preferably an argyrodite crystal phase from the viewpoint of lithium-ion conductivity. Since it is known from first-principle calculation of a solid electrolyte that $Cr^{3+}$ is likely to exist around halogen anions, a sulfide-based solid electrolyte containing Ha is preferable from the viewpoint of improving the water resistance and the electrochemical stability.

Examples of the sulfide-based solid electrolyte having excellent lithium-ion conductivity include sulfide-based solid electrolytes having an argyrodite crystal structure, and among these, sulfide-based solid electrolytes having Li-P-S-Ha elements are preferred, and it is more preferred that the electrolytes have a crystal phase. Further, in the halogen element, the halogen element is preferably derived from one or more selected from the group consisting of lithium chloride, lithium bromide, and lithium iodide. Furthermore, from the viewpoint of the lithium-ion conductivity, it is preferable that two or more are included.

In the present powder, an atomic ratio of a Cl element to a Br element is preferably 0.2:1.6 to 1.6:0.2. When the atomic ratio is within the above range, the ionic conductivity is higher. The above atomic ratio in the present powder is more preferably 0.4:1.4 to 1.4:0.4, and further preferably 0.6:1.2 to 1.2:0.6.

As described above, in the sulfide-based solid electrolyte powder of the present embodiment, it is preferable that $Cr^{3+}$ be present on the particle surface. Accordingly, the excellent electrochemical stability and water resistance can be achieved. In addition, it is believed that a trivalent transition metal can exert an effect similar to that of $Cr^{3+}$.

The lithium-ion conductivity of the present powder is preferably $1.0 \times 10^{-4}$ S/cm or more, more preferably $5.0 \times 10^{-4}$ S/cm or more, still more preferably $1.0 \times 10^{-3}$ S/cm or more, and particularly preferably $2.5 \times 10^{-3}$ S/cm or more from the viewpoint of improving the battery characteristics when used in a lithium-ion secondary battery.

The lithium-ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

<Sulfide-based Solid Electrolyte Layer>

When the present powder is used in a lithium-ion secondary battery, the present powder forms a sulfide-based solid electrolyte layer (hereinafter, simply referred to as a solid electrolyte layer) together with other components such as a binder, if necessary. As the binder or other components, known substances according to the related art can be used.

A content of the present powder relative to the entire solid electrolyte layer is preferably 80 mass% or more, and more preferably 90 mass% or more.

As a method for forming the solid electrolyte layer, a known method according to the related art can also be used. For example, the solid electrolyte layer can be formed by dispersing or dissolving the components constituting the solid electrolyte layer in a solvent to form a slurry, applying the slurry in the form of a layer (sheet), drying the slurry, and freely pressing the slurry. If necessary, the binder may be removed by heating. A thickness of the solid electrolyte layer can be easily adjusted by adjusting a coating amount or the like of the slurry.

In addition, instead of wet molding, the solid electrolyte layer may be formed by press-molding the present powder or the like on a surface of a positive electrode, a negative electrode, or the like by a dry method. Alternatively, the solid electrolyte layer may be formed on another base material and transferred onto the surface of the positive electrode, the negative electrode, or the like.

The present powder may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art can be used.

<Lithium-ion Secondary Battery>

The lithium-ion secondary battery including the present powder may include the present powder, and includes, for example, the solid electrolyte layer, the positive electrode layer, and the negative electrode layer.

As a material of an outer casing of the lithium-ion secondary battery, known materials according to the related art may also be used. As a shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

<Method for Producing Sulfide-based Solid Electrolyte Powder>

A method for producing the present powder is described below, but the present powder is not limited to those produced by this method. The method for producing the present powder includes, for example, the following steps 1 and 2.

(Step 1) Obtain a sulfide-based solid electrolyte containing at least one of a crystal phase and an amorphous phase (Step 2) Pulverize the sulfide-based solid electrolyte obtained in step 1 to obtain a powder Steps 1 and 2 are described below in order.

(Step 1)

The step of obtaining a sulfide-based solid electrolyte containing at least one of a crystal phase and an amorphous phase can be carried out by a known method in the related art. For example, it is preferable to include a step of obtaining a raw material mixture, a step of reacting a raw material mixture, and a step of crystallization or amorphization. The step of reacting the raw material mixture may be a heating reaction or a mechanochemical reaction. Further, the raw material mixture may be heated and crystallized or amorphized to obtain the sulfide-based solid electrolyte, and in that case, a separate step of crystallization or amorphization need not be included. Further, in addition to the step of obtaining the crystal phase or the amorphous phase, a step of increasing a degree of crystallinity and a step of rearranging crystals may be included.

The raw material varies depending on the desired composition of the crystal phase or amorphous phase, but for example, the raw material containing Li, P, and S can be used. In the case where it is desired to obtain an argyrodite crystal phase containing Ha or LPSHa crystallized glass containing Ha, a raw material containing Ha in addition to Li, P, and S can be used.

Specifically, for example, in order to obtain an argyrodite crystal, a raw material containing Li, P, S, and Ha is used. Furthermore, for example, in the case of LPS crystallized glass, a raw material containing Li, P and S is used. For these, materials for obtaining an argyrodite crystal containing Li, P, S and Ha, or materials known in the related art as LPS crystallized glass containing Li, P and S can be used.

In the case of the argyrodite crystal, examples thereof include a mixture of a compound containing Li (lithium), a compound containing P (phosphorus), a compound containing S (sulfur), and a compound containing Ha (halogen). In the case of the LPS crystallized glass, examples thereof include a mixture of a compound containing Li (lithium), a compound containing P (phosphorus), and a compound containing S (sulfur).

Examples of the compound containing Li include lithium compounds such as lithium sulfide ($Li_2S$), lithium oxide ($Li_2O$), lithium carbonate ($Li_2CO_3$), lithium hydroxide (LiOH), and lithium sulfate ($Li_2SO_4$), and elemental lithium metal.

Examples of the compound containing P include phosphorus sulfides such as phosphorus trisulfide ($P_2S_3$) and phosphorus pentasulfide ($P_2S_5$), phosphorus compounds such as lithium phosphate ($LiPO_3$, $Li_4P_2O_7$, and $Li_3PO_4$) and sodium phosphate ($NaPO_3$, $Na_4P_2O_7$, and $Na_3PO_4$), and elemental phosphorus.

Examples of a compound containing S include lithium sulfide ($Li_2S$), phosphorus sulfides ($P_2S_3$ and $P_2S_5$), and hydrogen sulfide ($H_2S$), and elemental sulfur may also be used.

Among the compounds containing the Ha, examples of a compound containing Cl (chlorine) include lithium chloride (LiCl), phosphorus trichloride ($PCl_3$), phosphorus pentachloride ($PCl_5$), diphosphorus tetrachloride ($P_2Cl_4$), phosphoryl chloride ($POCl_3$), sulfur dichloride ($SCl_2$), disulfur dichloride ($S_2Cl_2$), sodium chloride (NaCl), and boron trichloride ($BCl_3$).

Among the compounds containing Ha, examples of a compound containing Br (bromine) include lithium bromide (LiBr), phosphorus tribromide ($PBr_3$), phosphoryl chloride ($POBr_3$), disulfur dibromide ($S_2Br_2$), sodium bromide (NaBr), and boron tribromide ($BBr_3$).

Among them, a combination of lithium sulfide, phosphorus sulfides, and at least one of lithium chloride and lithium bromide is preferable.

Some types of raw materials may be very unstable in the air, may react with water and decomposed, and may generate hydrogen sulfide gas or be oxidized. In this case, the raw materials are preferably mixed in an inert atmosphere. In the case where raw materials unstable in the air are not used, mixing may be performed in the air.

The raw materials can be mixed by, for example, medium-less mixing such as a mixer mill, a pin mill, a powder stirrer, and air flow mixing. Furthermore, the raw materials may be partially made amorphous by mixing before heating.

The raw material mixture can be crystallized or amorphized by heating and melting, and cooling. Further, the raw material mixture may be crystallized or amorphized by heating or by a mechanochemical reaction.

In the case where the raw material is crystallized or amorphized by heating and melting and cooling, a state of a crystal phase or an amorphous phase can be adjusted by changing cooling conditions such as a cooling rate and pressure during the cooling.

As the conditions for heating and melting, a known condition according to the related art can be applied. For example, a heating temperature is preferably 600°C to 900°C. A time for the heating and melting is preferably 0.1 hours to 10 hours. Pressure during the heating and melting is preferably normal pressure to slight pressure. A dew point during the heating and melting is preferably -20°C or lower, and a lower limit thereof is not particularly limited, but is usually about -80°C. Further, an oxygen concentration is preferably 1,000 ppm or less.

For example, the crystallization may be performed by rapidly cooling the heated and melted raw material mixture at a cooling rate of 1°C/sec or more under a normal pressure. After that, a heat treatment may be further performed to perform a stabilization treatment. Further, an amorphous raw material mixture may be obtained by the rapid cooling, which may be used as it is. Furthermore, the amorphous raw material mixture may be heated again to crystalize and then, used.

In the case where the raw material mixture is crystallized or amorphized by heating, as a heating condition, a condition in a step according to the related art can be applied. Examples of a heating atmosphere include an inert gas atmosphere, a hydrogen sulfide gas atmosphere, a sulfur gas atmosphere, and a vacuum sealed tube. A heating temperature is preferably 200°C or higher and lower than 900°C. The heating time is preferably 0.1 hours to 100 hours. The heating may be performed a plurality of times.

(Step 2)

Step 2 is a step of pulverizing and powdering the sulfide-based solid electrolyte containing at least one of a crystal phase and an amorphous phase obtained in step 1.

In this step, it is preferable to pulverize the crystal phase or the amorphous phase in the presence of a chromium source such as $Cr_2O_3$. A pulverization method may be, for example, a wet pulverization method. By this step, $Cr^{3+}$ is present on the particle surface of the obtained present powder, which can realize excellent electrochemical stability and water resistance.

Examples of the chromium source include $Cr_2O_3$, an organic solvent containing $Cr^{3+}$, an oxide containing $Cr^{3+}$, and an oxide film of SUS metal.

The chromium source is preferably added in an amount of 1 ppm by mass or more, more preferably 10 ppm by mass or more, and still more preferably 30 ppm by mass or more in terms of Cr, with respect to the crystal phase or amorphous phase of the sulfide-based solid electrolyte. By adding 1 ppm by mass or more of the chromium source in terms of Cr, an appropriate amount of $Cr^{3+}$ is present on the particle surface of the obtained present powder, thereby achieving better electrochemical stability and water resistance.

There is no problem with containing the chromium source to an extent that does not inhibit the ionic conductivity of the electrolyte. For example, the chromium source is added in an amount of preferably 5 mass% or less, more preferably 1 mass% or less, and still more preferably 0.1 mass% or less in terms of Cr, with respect to the crystal phase or amorphous phase.

The amount of Cr in the chromium source can be calculated by ICP emission spectrometry.

In step 2, the crystal phase or amorphous phase is preferably pulverized in the presence of the oxygen source. This is because the oxygen source is believed to contribute to realizing a preferred form of $Cr^{3+}$. The oxygen source may be atmospheric oxygen, residual oxygen in a solvent, or a solvent containing oxygen such as ether.

The amount of oxygen taken into the electrolyte from the oxygen source is preferably 10 ppm by mass or more, more preferably 100 ppm by mass or more, and still more preferably 300 ppm by mass or more in terms of O, with respect to the crystal phase or amorphous phase of the sulfide-based solid electrolyte. By setting the amount of oxygen taken into the electrolyte from the oxygen source to be 10 ppm by mass or more in terms of O, it is possible to contribute to realizing a preferable form of $Cr^{3+}$, and further to realizing excellent electrochemical stability and water resistance.

There is no problem with containing oxygen atoms to the extent that the oxygen atoms do not inhibit the ionic conductivity of the electrolyte, and therefore the amount of oxygen taken into the electrolyte from the oxygen source is, for example, preferably 20 mass% or less, more preferably 5 mass% or less, and still more preferably 1 mass% or less in terms of O, with respect to the crystal phase or amorphous phase.

The amount of oxygen taken into the electrolyte from the oxygen source can be determined using an oxygen, nitrogen, and hydrogen analyzer (for example, ONH836 manufactured by LECO Corporation).

The amount of oxygen in the oxygen source can be measured with an oxygen concentration meter (for example, Model 201RS, manufactured by Techne Measurement Co., Ltd.) in the case of atmospheric oxygen, with an oxygen, nitrogen, and hydrogen analyzer (for example, ONH836 manufactured by LECO Corporation) in the case of oxygen derived from inorganic substances, with a DO meter (for example, B-506S manufactured by Iijima Electronics Co. Ltd.) in the case of oxygen remaining in a solvent, and by calculation from the number of moles of oxygen atoms in the solvent in the case of an oxygen-containing solvent.

The amount of oxygen of the oxygen source is preferably 100 ppm by mass or more, more preferably 1000 ppm by mass or more, and still more preferably 3000 ppm by mass or more based on a weight of the electrolyte in terms of $O_2$.

There is no problem with including the amount of oxygen to the extent that the amount of oxygen does not inhibit the ionic conductivity of the electrolyte, and the amount is preferably 200 mass% or less, more preferably 50 mass% or less, and still more preferably 10 mass% or less, based on the weight of the electrolyte in terms of $O_2$.

Thus, the method for producing the present powder preferably includes a step of pulverizing the sulfide-based solid electrolyte containing at least one of the crystal phase and the amorphous phase in the presence of the chromium source and the oxygen source.

In the case of the wet pulverization method, a type of used solvent is not particularly limited, but since the sulfide-based solid electrolyte has a tendency to react with moisture and deteriorate, it is preferable to use a non-aqueous organic solvent.

A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, and toluene, and cyclohexane, heptane, and octane are preferred from the viewpoint of a low saturated moisture concentration. Further, from the viewpoint of adjusting the moisture concentration, it is also preferable to use a mixed solvent in which these hydrocarbon-based solvents are mixed with toluene, dibutyl ether, or the like.

From the viewpoint of preventing a decrease in lithium-ion conductivity due to the sulfide-based solid electrolyte powder reacting with water during pulverization of the crystal phase or the amorphous phase of the sulfide-based solid electrolyte, it is preferable that the moisture concentration of the non-aqueous organic solvent is low. The moisture concentration of the non-aqueous organic solvent may be, for example, 170 ppm by mass or less, 150 ppm by mass or less, 120 ppm by mass or less, or 100 ppm by mass or less.

The wet pulverization method may be carried out using a pulverizer such as a ball mill, a planetary ball mill, or a bead mill.

In the wet pulverization, in addition to the above-mentioned solvent, an ether compound, an ester compound, or a nitrile compound may be added as an additive (dispersant).

When the solvent or the additive remains in the sulfide-based solid electrolyte powder obtained through the wet pulverization, a drying step may be carried out. A drying condition may be, for example, a temperature of 100°C or higher and 200°C or lower. A drying time is not particularly limited and may be, for example, 10 minutes or more and 24 hours or less. Further, the drying step may be carried out under a reduced pressure, for example an absolute pressure of 50 kPa or less. The drying step can be carried out using a hot plate, a drying oven, an electric oven, or the like.

In the present production method, by adding the chromium source at the powderization stage in step 2, $Cr^{3+}$ is present on the particle surface of the present powder, but the method for causing $Cr^{3+}$ to be present on the particle surface of the present powder in the present invention is not limited thereto, and any method that results in the presence of Cr3+ on the particle surface of the powder is not particularly limited. For example, the method may be by ion exchange or a method of causing a chromium source to be present on a powder surface by PVD or the like, and then causing $Cr^{3+}$ to be present on the particle surface by a subsequent treatment.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the following matters are disclosed in the present description.

[1] A sulfide-based solid electrolyte powder that emits photo-luminescence light between a wavelength of 660 nm to 750 nm.

[2] The sulfide-based solid electrolyte powder according to [1], in which a photo-luminescence peak ratio is 0.2 or more in a Raman spectrum obtained by excitation with light having a wavelength of 532 nm as represented by the following formula.

Photo-luminescence peak ratio = integrated intensity of peak in Raman shift region of 4300 cm$^{-1}$ to 4500 cm$^{-1}$/integrated intensity of peak in Raman shift region of 400 cm$^{-1}$ to 450 cm$^{-1}$

[3] The sulfide-based solid electrolyte powder according to [1] or [2], containing an argyrodite crystal.

[4] The sulfide-based solid electrolyte powder according to any one of [1] to [3], in which a lattice distortion is 0.002 or more.

[5] The sulfide-based solid electrolyte powder according to any one of [1] to [4], which satisfies the following formula:

$$\text{BET specific surface area (m}^2/\text{g)} \times \text{lattice distortion} \geq 0.01$$

[6] The sulfide-based solid electrolyte powder according to any one of [1] to [5], in which an atomic ratio of a Cl element to a Br element is 0.2:1.6 to 1.6:0.2.

[7] A method for producing the sulfide-based solid electrolyte powder according to any one of [1] to [6].

[8] The method for producing the sulfide-based solid electrolyte powder according to [7], the method including a step of pulverizing a sulfide-based solid electrolyte containing at least one of a crystal phase and an amorphous phase in the presence of a chromium source and an oxygen source.

[9] A sulfide-based solid electrolyte layer including the sulfide-based solid electrolyte powder according to any one of [1] to [6].

[10] A lithium-ion secondary battery including the sulfide-based solid electrolyte powder according to any one of [1] to [6].

EXAMPLES

Hereinafter, the present invention is described in detail with reference to Examples, but the present invention is not limited thereto. Examples 1 to 6, Example 8, and Example 9 are Inventive Examples, and Examples 7 and 10 are Comparative Examples.

(BET Specific Surface Area)

A sulfide-based solid electrolyte powder obtained in each example was measured by a multipoint krypton adsorption BET method using a specific surface area and pore distribution measuring device (pore distribution measuring device ASAP-2020, manufactured by Micromeritics Instrument Corporation) to determine a specific surface area. The sulfide-based solid electrolyte powder did not come into contact with the atmosphere from sampling to measurement.

Specifically, as a pretreatment, pressure was reduced at room temperature for 12 hours or more. A sample weight was 0.15 g, and at an analysis temperature of -196°C, measurements were performed at five or more points in a relative pressure (P/P0) range of 0.1 to 0.25, and BET plots were created. The specific surface area was calculated from the obtained plots.

Results are shown in "BET specific surface area (m$^2$/g)" in Table 1.

(Photo-luminescence Evaluation)

For the sulfide-based solid electrolyte powder obtained in each example, a Raman spectrum was obtained using a Raman spectrometer (LabRAM HR Evolution, manufactured by Horiba, Ltd.) by using light having a wavelength of 532 nm as excitation light, using an objective lens having a magnification of 10 and a numerical aperture of 0.25, and adjusting a power of a laser focused on the sulfide-based solid electrolyte powder to about 5 mW. The sulfide-based solid electrolyte powder was sealed in a synthetic quartz glass cell in a glove box in which a dew point is controlled to -60°C or less, and the measurement was performed in a state where exposure to the atmosphere was prevented. For the Raman spectrum, intensity was calibrated using a standard halogen lamp light source. For the obtained Raman spectrum, integrated intensity of a peak in a Raman shift region of 4300 cm$^{-1}$ to 4500 cm$^{-1}$ and integrated intensity of a peak in a Raman shift region of 400 cm$^{-1}$ to 450 cm$^{-1}$ were determined, and the photo-luminescence peak ratio was calculated according to the following formula. The integrated intensity of the peak was evaluated by determining an integrated area of a region surrounded by the spectrum and a baseline, using a straight line connecting both ends of the peak as the baseline, as shown in FIG. 1 and FIG. 2.

Photo-luminescence peak ratio = integrated intensity of peak in Raman shift region of 4300 cm$^{-1}$ to 4500 cm$^{-1}$/integrated intensity of peak in Raman shift region of 400 cm$^{-1}$ to 450 cm$^{-1}$

For Examples 1, 3, and 7 to be described below, results of Raman spectra are shown in FIG. 3.

(Reaction Current Evaluation (Electrochemical Stability Evaluation))

<Preparation of Carbon>

As an electronically conductive component of a working electrode composite, commercially available carbon black (Super C65, manufactured by TIMCAL) having a surface area of 62 $m^2$/g by the BET method was used, and (1) C65 dried in a Buchi oven at 300°C for 24 hours, and (2) C65 treated in a $H_2$/Ar reducing flow ($H_2$ in Ar: 20 vol%) at 800° C for 12 hours were used.

<Cyclic Voltammetry>

First, 60 mg of the sulfide-based solid electrolyte powder obtained in each of Examples 1 to 10 was filled into a PEEK housing and manually compressed with a stainless steel stamp. A solid electrolyte-carbon electrode composite was prepared by mixing the solid electrolyte and carbon in a weight ratio of 9:1 and manually grinding these materials in an agate mortar for 15 min. A working electrode was prepared by placing a mass of 12 mg of the solid electrolyte-carbon composite on a solid electrolyte pellet. The sample was uniaxially pressed at 35 kN (pressure: 440 MPa) for 3 minutes. After adding a 100 $\mu$m thick indium foil (ChemPur, 99.999%) having a diameter of 9 mm as a counter electrode on an opposite side of the pellet, the cell was fixed to an aluminum frame with a torque of 10 Nm, generating a pressure of approximately 60 MPa. An indium metal was selected as a material for counter and reference electrodes. Incorporation of approximately 1 at% Li into indium establishes a stable open circuit voltage (OCV) of 0.62 V vs $Li^+$/Li. After the assembly, each cell was equilibrated for one hour.

A CV experiment was performed using a VMP300 potentiostat (manufactured by Biologic) at a temperature of 298 K and a scan rate of 0.1 mV/s, starting a sweep from the OCV to a high potential side in a range of 1.9 V to 4.0 V. A current value (mA) at 4.0 V vs In/InLi was divided by a particle specific surface area ($m^2$/g) of a used particle (g), and an obtained value was used as a reaction current value and compared between samples.

($H_2$S Generation Amount for 30 min (Water Resistance Evaluation))

An amount of generated hydrogen sulfide was measured in an environment with a dew point of -20°C (gas flow rate: 0.5 L/min, and sample set to 10 mg). An amount (ml) of $H_2$S generated per 1 $m^2$ of sample was calculated by dividing an amount (ml/1 g of sample) of $H_2$S generated in 30 minutes by the BET specific surface area ($m^2$/g) of the sample. The smaller the ml/$m^2$ index of the sample, the more prevented the generation of $H_2$S from the surface, that is, the more excellent the water resistance is.

(Lattice Distortion (XRD))

For each of the sulfide-based solid electrolytes, synchrotron radiation X-ray diffraction measurement was performed, and a crystal structure was refined by a Rietveld method using RIETAN-FP (version: 3.12) software.

The Rietveld analysis was performed, and a structure having the lowest Rwp value was determined as the crystal structure of each example. The Rwp value is a reliability factor R-weighted pattern (Rwp) which is a general standard for the entire analysis range in fitting for structural refinement using Rietveld analysis. The lower the Rwp value, the better, and in the present analysis, the lowest Rwp values were all less than 10%. The lattice distortion was calculated by applying a peak position (2θ) and a half-width (β) of each peak obtained from the Rietveld analysis to a williamson-Hall plot.

The synchrotron radiation X-ray diffraction measurement was performed by packing a sample into a glass capillary and in an environment that was not exposed to the atmosphere, including sample handling and measurement.

(Preparation of Sulfide-based Solid Electrolyte Powder)

Examples 1 to 3

A lithium sulfide powder (manufactured by Sigma Corporation, purity: 99.98%), a phosphorus pentasulfide powder (manufactured by Sigma Corporation, purity: 99%), a lithium chloride powder (manufactured by Sigma Corporation, purity: 99.99%), and a lithium bromide powder (manufactured by Sigma Corporation, purity: 99.995%) were weighed according to a composition shown in Table 1 in a dry nitrogen atmosphere, and were placed in a quartz test tube and vacuum-sealed. After being dissolved at 750°C for 1 hour, the obtained mixture was cooled to obtain a sample.

The obtained sample was crushed in a mortar, mixed with 0.1 wt% of $Cr_2O_3$, and then pulverized. The pulverization was carried out by adding 2 g of electrolyte powder mixed with 0.1 wt% $Cr_2O_3$, 4 g of heptane, 4 g of dibutyl ether, and placing a $\Phi$1 mm ball made of alumina to perform wet pulverization for a predetermined time shown in Table 1. Thereafter, a mixture was dried at 180°C for 3 hours to obtain a sulfide-based solid electrolyte powder in each of Examples 1 to 3.

Example 4

First, a sample before the pulverization was obtained in the same manner as in Example 1. The obtained sample was crushed in a mortar, mixed with 0.01 wt% of $Cr_2O_3$, and then pulverized. The pulverization was carried out by adding 2 g of electrolyte powder mixed with 0.01 wt% $Cr_2O_3$, 4 g of heptane, 4 g of dibutyl ether, and placing a $\Phi$1 mm ball made of alumina to perform wet pulverization for 90 minutes. The pulverization media was then changed from 1 mm to 0.3 mm, and the sample was pulverized for 90 minutes, followed by drying at 180°C for 3 hours to obtain a sulfide-based solid electrolyte powder in Example 4.

Example 5

First, a sample before the pulverization was obtained in the same manner as in Example 1. The obtained sample was crushed in a mortar, mixed with 0.1 wt% of $Cr_2O_3$, and then pulverized. The pulverization was carried out by adding 2 g of electrolyte powder mixed with 0.1 wt% $Cr_2O_3$, and 8 g of heptane (moisture content ≤ 5wt ppm), and placing a $\Phi$1 mm ball made of alumina to perform wet pulverization for 90 minutes. Thereafter, a mixture was dried at 180°C for 3 hours to obtain a sulfide-based solid electrolyte powder in Example 5.

Example 6

Raw materials were mixed according to a composition shown in Table 1, and an amorphous sample ($D_{50}$: to 2 $\mu$m) was obtained by mechanical milling using a planetary ball mill. In a rotary kiln was placed 2 g of the sample and reacted at 385°C for 5 hours while stirring the sample at 10 rpm to obtain an argyrodite crystal ($D_{50}$: to 4 $\mu$m). The pulverization was carried out by adding 2 g of electrolyte powder mixed with 0.1 wt% $Cr_2O_3$, 4 g of heptane, 4 g of dibutyl ether, placing a $\Phi$1 mm ball made of alumina, rotating the mixture at a rotation speed of 50 rpm during the pulverization, and performing the pulverization for 90 minutes to obtain a sulfide-based solid electrolyte powder in Example 6. The above $D_{50}$ refers to a particle diameter $D_{50}$, and is a value at which 50 volume% of particles have a particle diameter equal to or less than this value when measured with a particle size distribution meter using a laser diffraction method (laser diffraction particle size distribution measuring apparatus MT3300EXII, manufactured by Microtrac).

Example 7

First, a sample before the pulverization was obtained in the same manner as in Example 1. An electrolyte powder mixed with 0.1 wt% $Cr_2O_3$ was mixed without being pulverized, and these were mixed in a mortar to obtain a sulfide-based solid electrolyte powder in Example 7.

Examples 8 and 9

Raw materials were weighed according to a composition shown in Table 1, and placed in a quartz test tube and vacuum-sealed. After melting at 750°C for 1 hour, the sealed tube was rapidly cooled in water to obtain a sulfide glass sample. The obtained sample was crushed in a mortar, mixed with 0.1 wt% of $Cr_2O_3$, and then pulverized. The pulverization was carried out by adding 2 g of electrolyte powder mixed with 0.1 wt% $Cr_2O_3$, 4 g of heptane, 4 g of dibutyl ether, and placing a $\Phi$1 mm ball made of alumina to perform wet pulverization for a predetermined time shown in Table 1. Thereafter, the mixture was dried at 180°C for 3 hours and heat-treated at 250°C to obtain a sulfide-based solid electrolyte powder containing a $Li_7P_3S_{11}$ crystal in Examples 8 and 9.

Example 10

Raw materials were weighed and mixed according to a composition shown in Table 1, and an amorphous sample ($D_{50}$: to 2 $\mu$m) was obtained by mechanical milling using a planetary ball mill. In a rotary kiln was placed 2 g of the sample and reacted at 260°C for 1 hour while stirring the sample at 10 rpm to obtain a $Li_7P_3S_{11}$ crystal ($D_{50}$: to 6 $\mu$m). Thereafter, an electrolyte powder mixed with 0.1 wt% $Cr_2O_3$ was mixed without being pulverized, and these were mixed in a mortar to obtain a sulfide-based solid electrolyte powder in Example 10.

[Table 1]

| | Composition | Pulverization time (min) | BET specific surface area (m²/g) | Photoluminescence light between 660-750 nm | Photoluminescence peak ratio | Reaction current (mA/m²) | H$_2$S generation amount for 30 min (ml/m²) | Lattice distortion (XRD) | BET specific surface area × lattice distortion |
|---|---|---|---|---|---|---|---|---|---|
| Ex. 1 | Li$_{5.4}$PS$_{4.4}$Cl$_{0.8}$Br$_{0.8}$ | 30 | 5.3 | Presence | 0.26 | 2.2 | 1.6 | 0.0025 | 0.0133 |
| Ex. 2 | Li$_{5.4}$PS$_{4.4}$Cl$_{0.8}$Br$_{0.8}$ | 60 | 8.7 | Presence | 0.51 | 1.5 | 1.2 | 0.0048 | 0.0418 |
| Ex. 3 | Li$_{5.4}$PS$_{4.4}$Cl$_{0.8}$Br$_{0.8}$ | 90 | 9.6 | Presence | 1.46 | 0.9 | 0.6 | 0.0056 | 0.0538 |
| Ex. 4 | Li$_{5.4}$PS$_{4.4}$Cl$_{0.8}$Br$_{0.8}$ | 90 × 2 | 14.0 | Presence | 1.12 | 1.1 | 0.7 | 0.0062 | 0.0868 |
| Ex. 5 | Li$_{5.4}$PS$_{4.4}$Cl$_{0.8}$Br$_{0.8}$ | 90 | 8.5 | Presence | 0.44 | 2.1 | 2.5 | 0.0027 | 0.0230 |
| Ex. 6 | Li$_{5.4}$PS$_{4.4}$Cl$_{0.8}$Br$_{0.8}$ | 90 | 8.8 | Presence | 0.03 | 3.0 | 3.9 | 0.0021 | 0.0185 |
| Ex. 7 | Li$_{5.4}$PS$_{4.4}$Cl$_{0.8}$Br$_{0.8}$ | 0 | 1.5 | Absence | 0 | 5.8 | 7.3 | 0.0011 | 0.0017 |
| Ex. 8 | Li$_7$P$_3$S$_{11}$ | 30 | 4.5 | Presence | 0.25 | 4.5 | 23 | - | - |
| Ex. 9 | Li$_7$P$_3$S$_{11}$ | 60 | 7.6 | Presence | 0.39 | 4.2 | 21 | - | - |
| Ex. 10 | Li$_7$P$_3$S$_{11}$ | 0 | 1.1 | Absence | 0 | 10.3 | 68 | - | - |

In the $Li_{5.4}PS_{4.4}Cl_{0.8}Br_{0.8}$ sulfide-based solid electrolyte powders of Examples 1 to 7, Inventive Examples 1 to 6, which emitted photo-luminescence light between a wavelength of 660 nm to 750 nm, were found to have low reaction currents and excellent electrochemical stability. It was found that Inventive Examples 1 to 6 had a small generation amount of $H_2S$ and were excellent in water resistance. This is believed to be because, in Inventive Examples 1 to 6, the photo-luminescence light was emitted between a wavelength of 660 nm to 750 nm and the lattice distortion was relatively high, and therefore $Cr^{3+}$ was incorporated into the particle surface, resulting in good electrochemical stability and water resistance.

On the other hand, Comparative Example 7 showed a high reaction current and a large generation amount of $H_2S$, and was found to be inferior in electrochemical stability and water resistance. This is believed to be because the photo-luminescence light was not emitted between a wavelength of 660 nm to 750 nm and the lattice distortion was relatively low, $Cr^{3+}$ was not incorporated into the particle surface, and the electrochemical stability and the water resistance were not improved.

In the $Li_7P_3S_{11}$ sulfide-based solid electrolyte powders of Examples 8 to 10, Inventive Examples 8 and 9, which emitted the photo-luminescence light between a wavelength of 660 nm to 750 nm, were found to have low reaction currents and excellent electrochemical stability. It was found that Inventive Examples 8 and 9 had a small generation amount of $H_2S$ and were excellent in water resistance. This is believed to be because, in Inventive Examples 8 and 9, the photo-luminescence light was emitted between a wavelength of 660 nm to 750 nm, and therefore $Cr^{3+}$ was incorporated into the particle surface, resulting in good electrochemical stability and water resistance.

On the other hand, Comparative Example 10 showed a high reaction current and a large generation amount of $H_2S$, and was found to be inferior in electrochemical stability and water resistance. This is believed to be because the photo-luminescence light was not emitted between a wavelength of 660 nm to 750 nm and the lattice distortion was relatively low, $Cr^{3+}$ was not incorporated into the particle surface, and the electrochemical stability and the water resistance were not improved.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2022-098230) filed on June 17, 2022, contents of which are incorporated herein by reference.

## Claims

1. A sulfide-based solid electrolyte powder that emits photo-luminescence light between a wavelength of 660 nm to 750 nm.

2. The sulfide-based solid electrolyte powder according to claim 1,
   wherein a photo-luminescence peak ratio is 0.2 or more in a Raman spectrum obtained by excitation with light having a wavelength of 532 nm as represented by the following formula:

   Photo-luminescence peak ratio = integrated intensity of peak in Raman shift region of 4300 $cm^{-1}$ to 4500 $cm^{-1}$/integrated intensity of peak in Raman shift region of 400 $cm^{-1}$ to 450 $cm^{-1}$.

3. The sulfide-based solid electrolyte powder according to claim 1, comprising an argyrodite crystal.

4. The sulfide-based solid electrolyte powder according to claim 1, wherein a lattice distortion is 0.002 or more.

5. The sulfide-based solid electrolyte powder according to claim 1, which satisfies the following formula:

$$\text{BET specific surface area } (\text{m}^2/\text{g}) \times \text{lattice distortion} \geq 0.01.$$

6. The sulfide-based solid electrolyte powder according to claim 1, wherein an atomic ratio of a Cl element to a Br element is 0.2:1.6 to 1.6:0.2.

7. A method for producing the sulfide-based solid electrolyte powder according to any one of claims 1 to 6.

8. The method for producing the sulfide-based solid electrolyte powder according to claim 7, the method comprising a step of pulverizing a sulfide-based solid electrolyte comprising at least one of a crystal phase and an amorphous phase in the presence of a chromium source and an oxygen source.

9. A sulfide-based solid electrolyte layer comprising the sulfide-based solid electrolyte powder according to any one of claims 1 to 6.

10. A lithium-ion secondary battery comprising the sulfide-based solid electrolyte powder according to any one of claims 1 to 6.

FIG. 1

FIG. 2

*FIG. 3*

## INTERNATIONAL SEARCH REPORT

| International application No. |
| --- |
| **PCT/JP2023/019737** |

**A.    CLASSIFICATION OF SUBJECT MATTER**

*H01B 1/10*(2006.01)i; *C01B 25/14*(2006.01)i; *H01B 1/06*(2006.01)i; *H01B 13/00*(2006.01)i; *H01M 10/052*(2010.01)i; *H01M 10/0562*(2010.01)i

FI:    H01B1/10; H01M10/0562; H01M10/052; H01B1/06 A; H01B13/00 501Z; C01B25/14

According to International Patent Classification (IPC) or to both national classification and IPC

**B.    FIELDS SEARCHED**

Minimum documentation searched (classification system followed by classification symbols)

H01B1/10; C01B25/14; H01B1/06; H01B13/00; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2020-53220 A (FURUKAWA CO LTD) 02 April 2020 (2020-04-02)<br>    paragraphs [0043]-[0047], [0074] | 1, 7, 9-10 |
| A | | 2-6, 8 |
| X | WO 2019/031436 A1 (IDEMITSU KOSAN CO) 14 February 2019 (2019-02-14)<br>    paragraphs [0084], [0092], [0101] | 1, 3, 6-7, 9-10 |
| A | | 2, 4-5, 8 |

☐ Further documents are listed in the continuation of Box C.            ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 July 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/019737**

| Patent document cited in search report | | | Publication date (day/month/year) | Patent family member(s) | Publication date (day/month/year) |
|---|---|---|---|---|---|
| JP | 2020-53220 | A | 02 April 2020 | (Family: none) | |
| WO | 2019/031436 | A1 | 14 February 2019 | US 2020/0220208 A1 paragraphs [0206], [0215]-[0218], [0235]-[0237] | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016024874 A

- JP 2022098230 A

**Non-patent literature cited in the description**

- Interface Stability in Solid-State Batteries. *Chem. Mater.*, 2016, vol. 28, 266-273

- **MICHELE et al.** *Chem. Mater.*, 2021, vol. 33 (9), 3379-3385